# EUROPEAN PATENT SPECIFICATION

(11) **EP 1 919 060 B1**
(45) Date of publication and mention of the grant of the patent: **14.03.2012**
(21) Application number: 07119357.7
(22) Date of filing: 26.10.2007
(51) Int. Cl.: H02J 7/00

(54) **Battery management system and driving method thereof**
System und Antriebsverfahren zur Batterieverwaltung
Système de gestion de batterie et son procédé de commande

(30) Priority: 01.11.2006 KR 20060107224
(43) Date of publication of application: 07.05.2008
(73) Proprietor: Samsung SDI Co., Ltd., Suwon-si, Gyeonggi-do (KR)
(72) Inventor: Lim, Gye-Jong, Legal & IP Team, Yongin-si, Kyunggi-do (KR); Choi, Soo-Seok, Legal & IP Team, Yongin-si, Kyunggi-do (KR); Lee, Young-Jo, Legal & IP Team, Yongin-si, Kyunggi-do (KR); Tae, Yong-Jun, Legal & IP Team, Yongin-si, Kyunggi-do (KR); Kim, Beom-Gyu, Legal & IP Team, Yongin-si, Kyunggi-do (KR); Park, Ho-Young, Legal & IP Team, Yongin-si, Kyunggi-do (KR); Yun, Han-Seok, Legal & IP Team, Yongin-si, Kyunggi-do (KR)
(74) Representative: Hengelhaupt, Jürgen

(56) References cited:
- US-A- 5 523 667
- US-A- 6 154 011
- US-A1- 2005 099 162

## Description

### BACKGROUND OF THE INVENTION

### 1. Field of the Invention

Aspects of the present invention relate to a battery management system. More particularly, aspects of the present invention relate to a battery management system that can be used in a vehicle using electrical energy.

### 2. Description of the Related Art

Vehicles with internal combustion engines using gasoline or diesel have caused serious air pollution. Accordingly, various attempts to develop electric or hybrid vehicles have recently been made to reduce such air pollution.

An electric vehicle uses an electric motor operating by electrical energy output from a battery. Since the electric vehicle generally uses a battery formed of at least one battery pack including a plurality of rechargeable/dischargeable (or secondary) cells, there is merit in that the electric vehicle generates no emission gases and produces less noise.

"Hybrid vehicle" commonly refers to a gasoline-electric hybrid vehicle that uses gasoline to power an internal-combustion engine and a battery to power an electric motor. Recently, hybrid vehicles using an internal-combustion engine and fuel cells and hybrid vehicles using a battery and fuel cells have been developed. The fuel cells directly produce electrical energy through a chemical reaction between hydrogen and oxygen, which are continuously provided.

Since battery performance directly affects the performance of the vehicle using electrical energy, it is required that each battery cell has great performance. Also, a battery management system (BMS) is necessary to measure a voltage and a current of the overall battery to efficiently manage charging/discharging operations of each battery cell therein.

In general, the battery management system needs to measure an accurate open circuit voltage (OCV) so as to measure an accurate SOC. When a vehicle is driven at a constant speed or is stopped, and a charging and discharging operation of the battery is not performed, the OCV may not be accurately measured as polarization and internal resistance in the battery, is generated. A length of time to correct the polarization is required to accurately measure the OCV. However, it is difficult to guarantee such a time when a hybrid vehicle is driven. Accordingly, an error in measuring the OCV measured after only a short time or before the correction of the polarization may cause an error in the calculation of the SOC.

US 6 154 011 discloses a driving method of a battery management system in an electric vehicle. The battery is pulse-charged and the resistance free maximum pulsed voltage is monitored.

The above information disclosed in this Background section is only for enhancement of understanding of the background of the invention and therefore it may contain information that does not form the prior art that is already known in this country to a person of ordinary skill in the art.

### SUMMARY OF THE INVENTION

Aspects of the present invention have been made in an effort to provide a battery management system having advantages of estimating an accurate state of charge (SOC) by accurately measuring an open circuit voltage (OCV) according to claim 9, and a driving method thereof according to claim 1.

A battery management system according to an embodiment of the present invention includes a sensing unit and a main control unit (MCU). The sensing unit measures a voltage of a battery. The MCU controls a charge/discharge of the battery, generates charge/discharge pulse pattern waveforms, measures a voltage value of at least one pulse pattern among the charge/discharge pulse pattern waveforms, and sets an average of the measured voltage to an open circuit voltage (OCV). A State of Charge (SOC) of the battery is estimated from the OCV setting. The sensing unit transmits the at least one measured voltage value to the MCU.

The MCU may charge the battery to a predetermined level if the battery is fully discharged, and the MCU may discharge the battery to the predetermined level if the battery is fully charged. Preferably, the predetermined SOC level is 60%. Preferably, the MCU generates the charge/discharge pulse pattern waveform after the battery is charged/discharged to the predetermined level.

Herein, the battery charge/discharge pulse pattern waveform is formed of a plurality of pulse patterns, each formed by repeating charge and discharge of the battery once.

In addition, the MCU includes a pulse pattern controller and an OCV setting unit. The pulse pattern controller counts the plurality of battery pulse patterns and stores a maximum peak voltage and a minimum peak voltage of a detected pulse pattern including at least the last pulse among the plurality of counted pulse patterns. The OCV setting unit calculates an average value of the maximum peak voltage and the minimum peak voltage of the detected pulse pattern, and sets the average value to an OCV.

Preferably, the average comprises an average of the maximum peak voltage and the minimum peak voltage of the at least one pulse pattern. The plurality of pulse patterns may comprise 10 pulse patterns.

Preferably, the average comprises an average of the maximum and minimum peak voltages of a 10th pulse pattern. More preferably, the average comprises an average of the maximum and minimum peak voltages of an 8th, a 9th, and a 10th pulse pattern.

The MCU may generate the charge/discharge pulse pattern waveform while the vehicle is operating and/or while the vehicle is accelerating. Also, the MCU may generate the charge/discharge pulse pattern waveform while the battery is under a load.

A driving method according to another embodiment of the present invention is provided to a battery management system for setting an OCV of a battery. The driving method includes: determining whether a battery is fully charged or fully discharged, and charging/discharging the battery to a predetermined SOC level of the battery; generating a plurality of battery charge/discharge pulse patterns, and counting the pulse patterns; and calculating an average value of a maximum peak voltage and a minimum peak voltage of a detected pulse pattern including at least the last pulse, and setting the average value to an OCV.

In addition, the battery charge/discharge pulse pattern waveform is formed of a plurality of pulse patterns generated by repeating charge and discharge of the battery once.

The SOC of the battery may be estimated from the OCV setting.

Preferably, the plurality of pulse patterns comprises 10 pulses. Preferably, the at least one detected pulse pattern comprises an 8th, a 9th, and the last pulse pattern. Preferably, the average value comprises an average of the maximum peak voltages and the minimum peak voltages of the 8th, the 9th, and the last pulse pattern. Alternatively, the average value comprises an average of all of the maximum peak voltages and the minimum peak voltages of the plurality of pulse patterns.

The driving method may further comprise storing the maximum peak voltage and the minimum peak voltage of the at least one detected pulse pattern.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 shows a diagram representing a battery, a battery management system (BMS), and peripheral devices of the BMS;
FIG. 2 shows a schematic diagram of the MCU of the BMS of FIG. 1; and
FIG. 3 is a flowchart representing a driving method of the BMS according to aspects of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

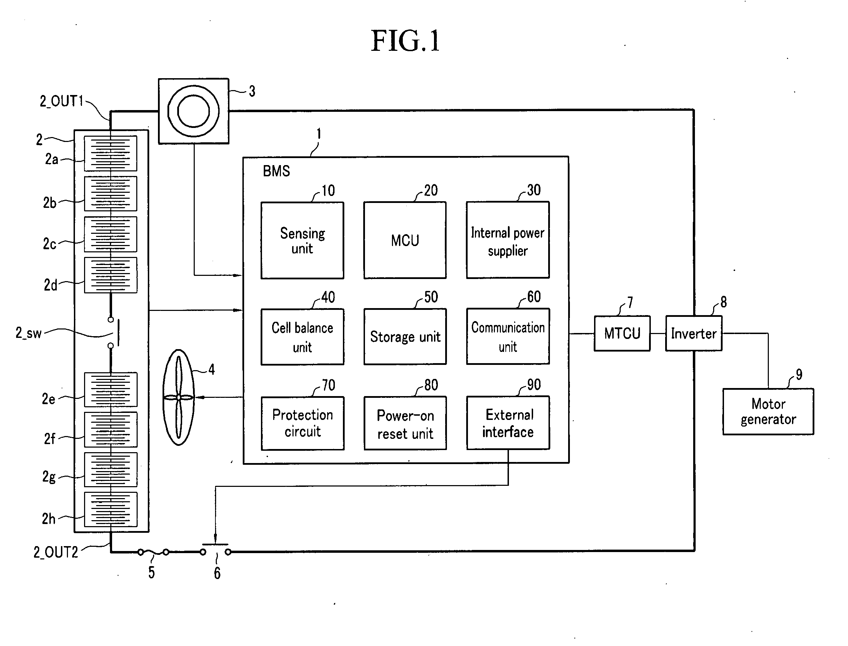

FIG. 1 shows a diagram representing a battery, a battery management system (BMS), and peripheral devices of the BMS according to aspects of the present invention. As shown in FIG. 1, the hybrid electric vehicle system according to aspects of the present invention includes a battery management system 1, a battery 2, a current sensor 3, a cooling fan 4, a fuse 5, a main switch 6, a motor control unit (MTCU) 7, an inverter 8, and a motor generator 9.

The battery 2 includes a plurality of sub-packs 2a to 2h having a plurality of battery cells coupled in series, a first output terminal 2_OUT1, a second output terminal 2_OUT2, and a safety switch 2_SW. The sub-packs 2a to 2h are coupled in series but need not be limited thereto. The sub-packs 2a to 2h may be coupled in series with another component or device disposed therebetween. The safety switch 2 SW is disposed between the sub-pack 2d and the sub-pack 2e. While 8 sub-packs 2a to 2h are exemplified and each sub-pack is a group of a plurality of battery cells according to aspects of the present invention, it is not limited thereto. The battery 2 may include more or fewer sub-packs and battery cells, both of which may be arranged in series or parallel. The safety switch 2_SW is manually turned on/off to guarantee the safety of a worker when performing operations on the battery or replacing the battery. The safety switch 2_SW is provided between the sub-pack 2d and the sub-pack 2e but is not limited thereto. The first output terminal 2_OUT1 and the second output terminal 2_OUT2 are coupled to the inverter 8 via the current sensor 2 and the fuse 5 and the main switch 6, respectively.

The current sensor 3 measures an output current of the battery 2 and outputs the measured output current to a sensing unit 10 of the BMS 1. In further detail, the current sensor 3 may be a hall current transformer (Hall CT) that uses the Hall Effect via a hall element to measure a current and output an analog current signal corresponding to the measured current value. The current sensor 3 may also be an ammeter disposed in a load line or a shunt resistor, which outputs a voltage signal corresponding to a current value through a resistor inserted in the load line.

The cooling fan 4 cools down heat generated by charging and discharging the battery 2 in response to a control signal from the BMS 1. The cooling fan 4 prevents the battery 2 and the charging/discharging efficiency thereof from deteriorating due to temperature increases.

The fuse 5 prevents an overflow current, which may be caused by a short circuit of the battery 2, from being transmitted to the battery 2. That is, when an over-current is generated, the fuse 5 is disconnects or breaks the circuit so as to interrupt the current from overflowing and damaging the battery 2.

The main switch 6 turns the battery 2 on and off in response to the control signals of the BMS 1 or control signals of the MTCU 7. The main switch 6 further protects the battery 2 from unusual phenomena, such as an overflowing voltage, an overflowing current, and high temperatures.

The BMS 1 includes a sensing unit 10, a micro control unit (MCU) 20, an internal power supplier 30, a cell balance unit 40, a storage unit 50, a communication unit 60, a protection circuit unit 70, a power-on reset unit 80, and an external interface 90.

The sensing unit 10 measures a voltage of the battery and transmits the measured voltage to the MCU 20. Hereinafter, a voltage at an output terminal of the battery will be referred to as a battery voltage. The sensing unit 10 may also measure a current of the battery 2 and transmit the measured current to the MCU 20.

The MCU 20 determines a state of charge (SOC) of the battery 2 based on the battery voltage transmitted from the sensing unit 10, and generates information that indicates the SOC of the battery 2. Then, the MCU 20 transmits the generated information to the MTCU 7 of the vehicle. In addition, the MCU 20 controls a charge or discharge of the battery 2 by transmitting to the battery 2 a predetermined number of battery charge/discharge pulse pattern waveforms, such that a voltage of the battery 2 can have a predetermined number of maximum and minimum peaks, in order to measure an accurate OCV of the battery 2.The alternating charging/discharging of the battery according to the predetermined number of pulse pattern waveforms has the purpose of reducing polarization (or polarized resistance) of the battery 2, then the MCU 20 calculates an accurate OCV by using a portion of the pulse pattern waveforms. A voltage drop due to internal resistance has not to be taken into account, because no current flows inside the battery 2 during the period of applying the pulse pattern waveform to the battery 2.Therefore, the MCU 20 sets an OCV setting from which an accurate SOC of the battery is determined by measuring and calculating a voltage of a predetermined number of pulse patterns of a battery charge/discharge pulse pattern waveform generated while the vehicle is being operated.

The internal power supplier 30 supplies power to the BMS 1 by using a backup battery (not shown). The cell balance unit 40 balances the SOC of each cell in the battery 2. That is, cells relatively more charged are discharged, and cells relatively less charged are charged. The storage unit 50 stores data of the current SOC and a current state of health (SOH) when the power source of the BMS 1 is turned off.

The communication unit 60 communicates with the MTCU 7 of the vehicle. The protection circuit unit 70 uses firmware elements to protect the battery 2 from shocks, overflowing currents, and low voltages. The power-on reset unit 80 resets the overall system when the power source of the BMS 1 is turned on. The external interface 90 couples BMS 1 auxiliary devices, such as the cooling fan 4 and the main switch 6, to the MCU 20. While the cooling fan 4 and the main switch 6 are shown as assistance devices for the BMS 1, the BMS 1 is not limited thereto. For example, other auxiliary devices may be included or the present auxiliary devices may be excluded.

The MTCU 7 determines a torque state based on information from an accelerator, a brake, and a vehicle speed, and controls an output of the motor generator 9 so that the output corresponds to torque information. That is, the MTCU 7 controls a switching operation of the inverter 8, and controls the output of the motor generator 9 so that the output corresponds to the torque information. In addition, the MTCU 7 receives the SOC of the battery 2 from the MCU 20 through the communication unit 60, and controls the SOC level of the battery 2 toward a target level (e.g., 55%). For example, when the SOC level transmitted from the MCU 20 is lower than 55%, the MTCU 7 controls a switch to control the inverter 8 so as to output power toward the battery 2 and charge the battery 2. In such case, current flows toward the battery 2 to charge the battery 2. When the SOC level is greater than 55%, the MTCU 7 controls the switch of the inverter 8 to output the power toward the motor generator 9 and discharge the battery 2. In such case, current flows from the battery 2 to power the vehicle.

The inverter 8 controls the battery 2 to be charged or discharged in response to the control signal from the MTCU 7. The motor generator 9 uses the electrical energy of the battery to drive the vehicle based on the torque information transmitted from the MTCU 7.

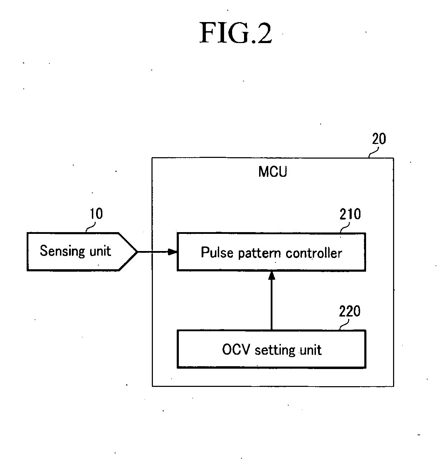

FIG. 2 shows a schematic diagram of the MCU 20 of the BMS 1 of FIG. 1. As shown in FIG. 2, the MCU 20 includes a pulse pattern controller 210 and an OCV setting unit 220.

The pulse pattern controller 210 determines whether the battery 2 is fully charged or fully discharged, and discharges the battery 2 to a SOC value of 60% at a 1C rate when the battery 2 is fully charged and charges the battery 2 to a SOC value of 60% at a 1C rate when the battery 2 is fully discharged. Herein, a charge current and a discharge current of a battery are measured in C-rate, which represents the amount of charge/discharge current required for fully charging/discharging the battery within one hour. The pulse pattern controller 210 charges or discharges the battery 2 to a SOC value of 60% at a 1C rate, and controls the charge/discharge operation of the battery 2 so as to control a voltage of the battery 2 to have a plurality of pulse pattern waveforms.

In this case, each of the plurality of pulse pattern waveforms is formed of a plurality of pulse patterns, each of which is discharging and charging the battery 2 once. In addition, the pulse pattern controller 210 eliminates polarization and internal resistance in the battery 2, by using the battery charge/discharge pulse pattern waveform.

The pulse pattern controller 210 controls a SOC of the battery 2 toward a constant level when the battery 2 is fully charged or fully discharged and controls the charge/discharge operation of the battery 2 so as to generate the plurality of battery pulse patterns. In more detail, the pulse pattern controller 210 determines whether the battery 2 is fully charged or fully discharged, discharges the battery 2 to a SOC value of 60% at a 1C rate when the battery 2 is fully charged, and charges the battery 2 to a SOC value of 60% at a 1C rate when the battery 2 is fully discharged.

In addition, the pulse pattern controller 210 controls a battery charge/discharge pulse pattern waveform after the battery 2 is charged or discharged. In such case, each of the plurality of battery charge/discharge pulse pattern waveforms is formed of 10 pulse patterns, and each pulse pattern repeats charge and discharge of the battery 2 once. The pulse pattern controller 210 counts a waveform formed of 10 pulses, from the first pulse to the 10th pulse, and stops counting after the pulse pattern controller 210 counts 10 times. Herein, when the number of the pulse waveforms is greater than or equal to 8, the pulse pattern controller stores a maximum peak voltage and a minimum peak voltage among battery voltages of the detected pulse patterns. The detected pulse pattern may include at least the last pulse among the plurality of pulse patterns.

The OCV setting unit 220 adds the maximum peak voltage and the minimum peak voltage of pulse pattern from the 8th detected pulse pattern to the 10th detected pulse pattern transmitted from the pulse pattern controller 210, and calculates an average of the maximum and minimum peak voltages. Then, the OCV setting unit 220 sets the calculated average value to an OCV setting.

According to the OCV setting method of the BMS 1, the OCV setting unit 220 integrates a voltage of a detected pulse pattern that may include at least the last pulse and divides the integration result by time, and then sets a division result to the OCV setting.

That is, the OCV setting unit 220 according to aspects of the present invention may set an average value of maximum and minimum peak voltages of three detected pulse patterns among the plurality of pulse patterns, but this is not restrictive. The OCV setting unit 220 may use the last pulse or the OCV setting unit 220 may average several previous pulses to set the OCV setting. In addition, the described embodiment may be modified in various different ways.

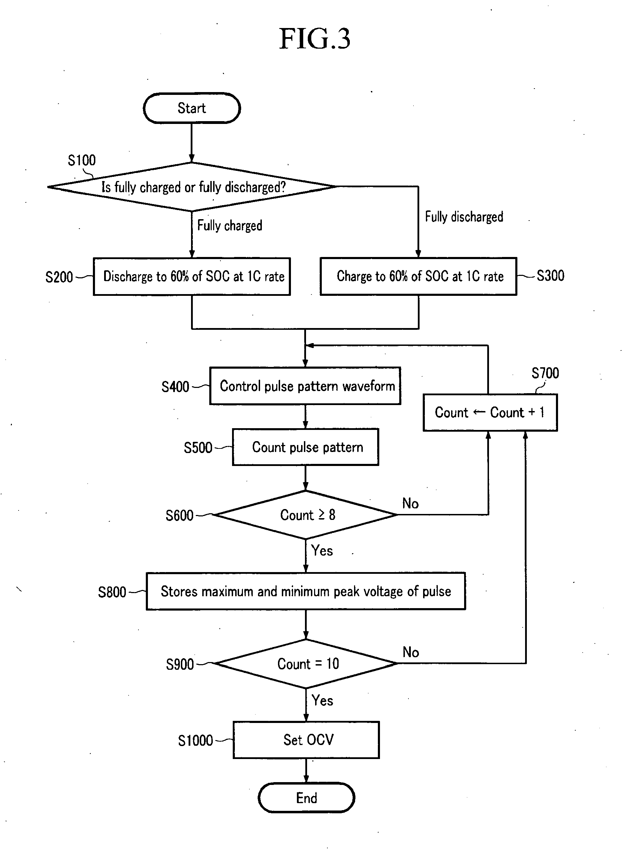

FIG. 3 is a flowchart representing a driving method of the battery management system (BMS 1) according to aspects of the present invention. In operation (S100), the MCU 20 of the BMS 1 determines whether the battery 2 is fully charged or fully discharged. When it is determined in operation (S100) that the battery 2 is fully charged, the MCU 20 discharges the fully charged battery to a predetermined SOC level of 60% at a 1C rate in operation (S200). When it is determined in operation (S100) that the battery 2 is fully discharged, the MCU 20 charges the fully discharged battery 2 to the predetermined SOC level of 60% at a 1C rate in operation (S300). Herein, a charge current and a discharge current of a battery is measured in C-rate, which represents the amount of charge/discharge current required to fully charge/discharge the battery within one hour. However, the predetermined SOC level needs not be 60%.

After charging or discharging the battery 2 to the predetermined SOC level (e.g. 60%), the MCU 20 controls a voltage of the battery 2 by applying a battery charge/discharge pulse pattern waveform in operation (S400). In this case, the battery charge/discharge pulse pattern waveform is formed of 10 pulse patterns, wherein each of the 10 pulse patterns charges the battery 2 and discharges the battery 2 once. The MCU 20 counts the battery charge/discharge pulse patterns in operation (S500). Then, the MCU 20 determines whether it has counted the pulse pattern more than 8 times in operation (S600). When it is determined in operation (S600) that the MCU 20 has counted the pulse pattern fewer than 8 times, the MCU 20 increments the number of counting by 1, in operation (S700). Then, the MCU 20 returns to the operation (S400).

When it is determined in operation (S600) that the MCU 20 has counted the pulse pattern at least 8 times, the MCU 200 sets the 8th pulse pattern to the 10th pulse pattern as detected pulse patterns, and stores a maximum peak voltage and a minimum peak voltage of each pulse pattern of the detected pulse patterns in operation (S800). Then, whether counting of the pulse pattern has been performed 10 times is determined in operation (S900). When a result of the determination in operation (S900) shows that the counting of the pulse pattern has been performed less than 10 times, the counting of the pulse pattern is performed one more time and incremented in operation (S700). Then, the process is returned to operation (S400).

When a result of the determination in operation (S900) shows that the counting of the pulse pattern has been performed 10 times, the MCU 200 calculates an average value of the maximum peak voltages and the minimum peak voltages from the detected pulse patterns stored in operation (S800) and the average value (of the maximum and minimum voltages) is set as the OCV setting, in operation (S1000). The OCV setting is then used to estimate the SOC of the battery 2.

Although the driving method is described as averaging the maximum and minimum peak voltages of the 8th through 10th pulse patterns, the MCU 200 is not limited thereto. For example, the OCV setting may be determined by only averaging the minimum peak voltages of the 8th through 10th pulse patterns. Or, only the maximum and minimum peak voltages of the 10th pulse pattern may be averaged to determine the OCV setting from which the SOC of the battery 2 is determined.

As described, the battery management system and the driving method according to aspects of the present invention use a detected pulse pattern to set an OCV setting from which a more accurate SOC may be estimated. The battery management system determines whether the battery is in the fully-charged state or in the fully-discharged state, and charges or discharges the battery to a predetermined SOC level of 60% at a 1C rate according to a result of the determination. Then, the battery management system controls a charge/discharge pulse pattern waveform of the battery and counts a pulse pattern. A maximum peak voltage and a minimum peak voltage of each counted pulse pattern is stored, and an average value of maximum peak voltages and the minimum peak voltages of the 8th counted pulse pattern to the 10th counted pulse pattern is calculated. The calculated average value is set as the OCV setting.

According to aspects of the present invention, the polarization voltage can be decreased in order to reduce the polarization phenomenon. The pulse pattern voltage is compulsorily applied inside the battery 2 and the polarization voltage can be decreased by the pulse pattern voltage. The more pulses are applied to the battery, the more the polarization voltage can be decreased. However, the period of applying the pulses is restricted. Therefore, to exactly calculate the OCV, the present invention averages only the last pulses. Accordingly, an accurate OCV can be set while the vehicle is operating and/or accelerating or while the battery is under a load. Accordingly, the battery management system and the driving method of the battery management system can measure an accurate SOC.

In addition, errors in SOC estimation can be reduced by reducing an error that may be generated when setting an OCV setting, and therefore overcharge and over-discharge of the battery can be prevented.

## Claims

1. A driving method of a battery management system (1) to control the charge/discharge of a battery (2), the driving method comprising:
determining whether the battery (2) is fully charged or fully discharged;
charging/discharging the battery (2) to a state of charge (SOC) of a predetermined level;
generating a battery charge/discharge pulse pattern waveform comprising a plurality of pulse patterns;
wherein the driving method is **characterized by** the steps of:
counting the pulse patterns;
calculating an average value of a maximum peak voltage and a minimum peak voltage of at least one counted pulse pattern including the last pulse pattern; and
setting the average value to an open circuit voltage (OCV) setting.

2. The driving method of claim 1, wherein each of the plurality of pulse patterns charges and discharges the battery (2) once.

3. The driving method of one of the preceding claims, further comprising estimating the state of charge (SOC) of the battery (2) from the open circuit voltage (OCV) setting.

4. The driving method of one of the preceding claims, wherein the plurality of pulse patterns comprises 10 pulses.

5. The driving method of claim 4, wherein the at least one detected pulse pattern comprises an 8th, a 9th, and the last pulse pattern.

6. The driving method of claim 5, wherein the average value comprises an average of the maximum peak voltages and the minimum peak voltages of the 8th, the 9th, and the last pulse pattern.

7. The driving method of one of the preceding claims, further comprising storing the maximum peak voltage and the minimum peak voltage of the at least one detected pulse pattern.

8. The driving method of one of claims 1-3, wherein the average value comprises an average of all of the maximum peak voltages and the minimum peak voltages of the plurality of pulse patterns.

9. A battery management system (1) for a vehicle, comprising:
a sensing unit (10) to measure a voltage of a battery (2); and
a main control unit (MCU 20) to control a charge/discharge of the battery (2), to generate a charge/discharge pulse pattern waveform comprising a plurality of pulse patterns, to measure at least one voltage value of at least one pulse pattern, and to set an average of the at least one measured voltage value to an open circuit voltage (OCV) setting from which a state of charge (SOC) of the battery (2) is estimated,
wherein the sensing unit (10) transmits the at least one measured voltage value to the main control unit (MCU 20), and
**characterized in that** the main control unit (MCU 20) comprises:
a pulse pattern controller (210) to count a number of the pulse patterns and to store a maximum peak voltage and a minimum peak voltage of a detected pulse pattern including at least the last pulse pattern of the counted number of pulse patterns; and
an open circuit voltage (OCV) setting unit (220) to calculate an average value of the maximum peak voltage and the minimum peak voltage of the counted number of pulse patterns, and setting the average value to an open circuit voltage (OCV) setting.

10. The battery management system of claim 9, wherein the MCU (20) charges the battery (2) to a predetermined level if the battery is fully discharged, and the main control unit (MCU 20) discharges the battery (2) to the predetermined level if the battery (2) is fully charged.

11. The battery management system of claim 10, wherein the predetermined state of charge (SOC) level is 60%.

12. The battery management system of one of claims 10 and 11, wherein the main control unit (MCU 20) generates the charge/discharge pulse pattern waveform after the battery (2) is charged/discharged to the predetermined level.

13. The battery management system of one of claims 9-12, wherein each of the plurality of pulse patterns charges and discharges the battery once.

14. The battery management system of one of claims 9-13, wherein the average comprises an average of the maximum peak voltage and the minimum peak voltage of the at least one pulse pattern.

15. The battery management system of one of claims 9-14, wherein the plurality of pulse patterns comprises 10 pulse patterns.

16. The battery management system of claim 15, wherein the average comprises an average of the maximum and minimum peak voltages of a 10th pulse pattern.

17. The battery management system of claim 15, wherein the average comprises an average of the maximum and minimum peak voltages of an 8th, a 9th, and a 10th pulse pattern.

18. The battery management system of one of claims 9-17, wherein the main control unit (MCU 20) generates the charge/discharge pulse pattern waveform while the vesicle is operating and/or while the vehicle is accelerating.

19. The battery management system of one of claims 9-18, wherein the main control unit (MCU 20) generates the charge/discharge pulse pattern waveform while the battery (2) is under a load.

## Patentansprüche

1. Antriebsverfahren eines Batterieverwaltungssystems (1) zur Steuerung der Ladung/Entladung einer Batterie (2), umfassend:
Bestimmen, ob die Batterie (2) vollständig geladen oder vollständig entladen ist;
Laden/Entladen der Batterie (2) auf einen vorgegebenen Ladezustand (SOC);
Generieren einer Pulswellenform zum Laden/Entladen einer Batterie, welche eine Vielzahl von Pulsmustern umfasst;
wobei das Antriebsverfahren durch folgende Schritte **gekennzeichnet** ist:
Zählen der Pulsmuster;
Berechnen eines Mittelwerts einer maximalen Spitzenspannung und einer minimalen Spitzenspannung von mindestens einem der gezählten Pulsmuster, einschließlich des letzten Pulsmusters; und
Einstellen des Mittelwerts auf eine Einstellung der Leerlaufspannung (OCV).

2. Antriebsverfahren nach Anspruch 1, wobei
jedes der Pulsmuster die Batterie (2) einmal lädt und entlädt.

3. Antriebsverfahren nach einem der vorhergehenden Ansprüche, zusätzlich umfassend eine Abschätzung des Ladezustands (SOC) der Batterie (2) aus der Einstellung der Leerlaufspannung (OCV).

4. Antriebsverfahren nach einem der vorhergehenden Ansprüche, wobei die Vielzahl von Pulsmustern 10 Impulse umfasst.

5. Antriebsverfahren nach Anspruch 4, wobei
das mindestens eine erkannte Pulsmuster ein 8., ein 9. und das letzte Pulsmuster umfasst.

6. Antriebsverfahren nach Anspruch 5, wobei
der Mittelwert einen Mittelwert der maximalen Spitzenspannungen und der minimalen Spitzenspannungen des 8., des 9. und des letzten Pulsmusters umfasst.

7. Antriebsverfahren nach einem der vorhergehenden Ansprüche, zusätzlich umfassend die Speicherung der maximalen Spitzenspannung und der minimalen Spitzenspannung des mindestens einen erkannten Pulsmusters.

8. Antriebsverfahren nach einem der Ansprüche 1 bis 3, wobei
der Mittelwert einen Mittelwert aller maximalen Spitzenspannungen und aller minimalen Spitzenspannungen der Vielzahl von Pulsmustern umfasst.

9. Batterieverwaltungssystem (1) für ein Fahrzeug, umfassend:
eine Messeinheit (10) zur Messung einer Spannung einer Batterie (2); und
eine zentrale Steuereinheit (MCU 20) zur Steuerung einer Ladung/Entladung der Batterie (2), zur Generierung einer Pulswellenform zum Laden/Entladen, welche eine Vielzahl von Pulsmustern umfasst, zur Messung von mindestens einem Spannungswert mindestens eines Pulsmusters, und
zur Einstellung eines Mittelwerts des mindestens einen gemessenen Spannungswerts auf eine Einstellung der Leerlaufspannung (OCV), aus welcher ein Ladezustand (SOC) der Batterie (2) abgeschätzt wird,
wobei die Messeinheit (10) den mindestens einen gemessenen Spannungswert an die zentrale Steuereinheit (MCU 20) überträgt, und
**dadurch gekennzeichnet, dass** die zentrale Steuereinheit (MCU 20) umfasst:
einen Pulsmusterregler (210), der eine Anzahl der Pulsmuster zählt und eine maximale Spitzenspannung und eine minimale Spitzenspannung eines erkannten Pulsmusters speichert, einschließlich mindestens des letzten Pulsmusters der gezählten Anzahl von Pulsmustern; und
eine Einheit (220) zur Einstellung der Leerlaufspannung (OCV), die einen Mittelwert der maximalen Spitzenspannung und der minimalen Spitzenspannung der gezählten Anzahl von Pulsmustern berechnet und den Mittelwert auf eine Einstellung der Leerlaufspannung (OCV) einstellt.

10. Batterieverwaltungssystem nach Anspruch 9, wobei
die zentrale Steuereinheit (MCU 20) die Batterie (2), wenn diese vollständig entladen ist, auf einen vorgegebenen Zustand lädt, und die zentrale Steuereinheit (MCU 20) die Batterie (2), wenn diese vollständig geladen ist, auf einen vorgegebenen Zustand entlädt.

11. Batterieverwaltungssystem nach Anspruch 10, wobei
der vorgegebene Ladezustand (SOC) 60 % beträgt.

12. Batterieverwaltungssystem nach einem der Ansprüche 10 und 11, wobei die zentrale Steuereinheit (MCU 20) die Pulswellenform zum Laden/Entladen generiert, nachdem die Batterie (2) auf den vorgegebenen Zustand geladen/entladen wurde.

13. Batterieverwaltungssystem nach einem der Ansprüche 9 bis 12, wobei jedes der Pulsmuster die Batterie einmal lädt und entlädt.

14. Batterieverwaltungssystem nach einem der Ansprüche 9 bis 13, wobei der Mittelwert einen Mittelwert der maximalen Spitzenspannung und der minimalen Spitzenspannung des mindestens einen Pulsmusters umfasst.

15. Batterieverwaltungssystem nach einem der Ansprüche 9 bis 14, wobei die Vielzahl von Pulsmustern 10 Pulsmuster umfasst.

16. Batterieverwaltungssystem nach Anspruch 15, wobei
der Mittelwert einen Mittelwert der maximalen und minimalen Spitzenspannungen eines 10. Pulsmusters umfasst.

17. Batterieverwaltungssystem nach Anspruch 15, wobei
der Mittelwert einen Mittelwert der maximalen und minimalen Spitzenspannungen eines 8., eines 9. und eines 10. Pulsmusters umfasst.

18. Batterieverwaltungssystem nach einem der Ansprüche 9 bis 17, wobei die zentrale Steuereinheit (MCU 20) die Pulswellenform zum Laden/Entladen generiert, während das Fahrzeug in Betrieb ist und/oder während das Fahrzeug beschleunigt.

19. Batterieverwaltungssystem nach einem der Ansprüche 9 bis 18, wobei die zentrale Steuereinheit (MCU 20) die Pulswellenform zum Laden/Entladen generiert, während die Batterie (2) unter Last ist.

## Revendications

1. Procédé d'attaque d'un système de gestion de batterie (1) pour commander la charge/décharge d'une batterie (2), le procédé d'attaque comprenant :
la détermination du fait que la batterie (2) est totalement chargée ou totalement déchargée ;
la charge/décharge de la batterie (2) à un état de charge (SOC pour « State Of Charge ») d'un niveau prédéterminé ;
la génération d'une forme d'onde de motifs d'impulsions de charge/décharge de batterie comprenant une pluralité de motifs d'impulsions ;
le procédé d'attaque étant **caractérisé par** les étapes consistant à :
compter les motifs d'impulsions ;
calculer une valeur moyenne d'une tension de pic maximale et d'une tension de pic minimale d'au moins un motif d'impulsions compté comprenant le dernier motif d'impulsions ; et
établir la valeur moyenne à une valeur de tension de circuit ouvert (OCV pour « Open Circuit Voltage »).

2. Procédé d'attaque selon la revendication 1, dans lequel chacun de la pluralité de motifs d'impulsions charge et décharge la batterie (2) une fois.

3. Procédé d'attaque selon l'une des revendications précédentes, comprenant de plus l'estimation de l'état de charge (SOC) de la batterie à partir de la valeur de tension en circuit ouvert (OCV).

4. Procédé d'attaque selon l'une des revendications précédentes, dans lequel la pluralité de motifs d'impulsions comprend 10 impulsions.

5. Procédé d'attaque selon la revendication 4, dans lequel l'au moins un motif d'impulsions détecté comprend un 8^{ème}, un 9^{ème} et le dernier motifs d'impulsions.

6. Procédé d'attaque selon la revendication 5, dans lequel la valeur moyenne comprend une moyenne des tensions de pic maximales et des tensions de pic minimales du 8^{ème}, du 9^{ème} et du dernier motifs d'impulsions.

7. Procédé d'attaque selon l'une des revendications précédentes, comprenant de plus la mémorisation de la tension de pic maximale et de la tension de pic minimale de l'au moins un motif d'impulsions détecté.

8. Procédé d'attaque selon l'une des revendications 1 à 3, dans lequel la valeur moyenne comprend une moyenne de la totalité des tensions de pic maximales et des tensions de pic minimales de la pluralité de motifs d'impulsions.

9. Système de gestion de batterie (1) pour un véhicule, comprenant :
une unité de détection (10) pour mesurer une tension d'une batterie (2) ; et
une unité de commande principale (MCU 20) pour commander une charge/décharge de la batterie (2), pour générer une forme d'onde de motifs d'impulsions de charge/décharge comprenant une pluralité de motifs d'impulsions, pour mesurer au moins une valeur de tension d'au moins un motif d'impulsions, et pour établir une moyenne de l'au moins une valeur de tension mesurée à une valeur de tension de circuit ouvert (OCV) à partir de laquelle est estimé un état de charge (SOC) de la batterie (2),
dans lequel l'unité de détection (10) transmet l'au moins une valeur de tension mesurée à l'unité de commande principale (MCU 20), et
**caractérisé en ce que** l'unité de commande principale (MCU 20) comprend :
un dispositif de commande de motifs d'impulsions (210) pour compter un nombre des motifs d'impulsions et pour mémoriser une tension de pic maximale et une tension de pic minimale d'un motif d'impulsions détecté comprenant au moins le dernier motif d'impulsions du nombre de motifs d'impulsions compté ; et
une unité d'établissement de tension de circuit ouvert (OCV) (220) pour calculer une valeur moyenne de la tension de pic maximale et de la tension de pic minimale du nombre de motifs d'impulsions compté, et établir la valeur moyenne à une valeur de tension de circuit ouvert (OCV).

10. Système de gestion de batterie selon la revendication 9, dans lequel l'unité de commande principale (MCU 20) charge la batterie (2) à un niveau prédéterminé si la batterie est totalement déchargée, et l'unité de commande principale (MCU 20) décharge la batterie (2) au niveau prédéterminé si la batterie (2) est totalement chargée.

11. Système de gestion de batterie selon la revendication 10, dans lequel le niveau d'état de charge (SOC) prédéterminé est de 60%.

12. Système de gestion de batterie selon l'une des revendications 10 et 11, dans lequel l'unité de commande principale (MCU 20) génère la forme d'onde de motifs d'impulsions de charge/décharge après que la batterie (2) ait été chargée/déchargée au niveau prédéterminé.

13. Système de gestion de batterie selon l'une des revendications 9 à 12, dans lequel chacun de la pluralité de motifs d'impulsions charge et décharge la batterie une fois.

14. Système de gestion de batterie selon l'une des revendications 9 à 13, dans lequel la moyenne comprend une moyenne de la tension de pic maximale et de la tension de pic minimale d'au moins un motif d'impulsions.

15. Système de gestion de batterie selon l'une des revendications 9 à 14, dans lequel la pluralité de motifs d'impulsions comprend 10 motifs d'impulsions.

16. Système de gestion de batterie selon la revendication 15, dans lequel la moyenne comprend une moyenne des tensions de pic maximale et minimale d'un 10^{ème} motif d'impulsions.

17. Système de gestion de batterie selon la revendication 15, dans lequel la moyenne comprend une moyenne des tensions de pic maximale et minimale d'un 8^{ème}, d'un 9^{ème} et d'un 10^{ème} motifs d'impulsions.

18. Système de gestion de batterie selon l'une des revendications 9 à 17, dans lequel l'unité de commande principale (MCU 20) génère la forme d'onde de motifs d'impulsions de charge/décharge tandis que le véhicule fonctionne et/ou tandis que le véhicule accélère.

19. Système de gestion de batterie selon l'une des revendications 9 à 18, dans lequel l'unité de commande principale (MCU 20) génère la forme d'onde de motifs d'impulsions de charge/décharge tandis que la batterie (2) supporte une charge.
